**Europäisches Patentamt**

**European Patent Office**

**Office européen des brevets**

(19)

(11) Veröffentlichungsnummer : **0 018 664**
**B1**

(12) # EUROPÄISCHE PATENTSCHRIFT

(45) Veröffentlichungstag der Patentschrift :
**22.06.83**

(51) Int. Cl.³ : **B 29 H 19/02**, B 29 H 19/04

(21) Anmeldenummer : **80102464.7**

(22) Anmeldetag : **06.05.80**

(54) **Verfahren und Vorrichtung zur Zerkleinerung von Gummiabfällen, insbesondere Gummireifen.**

(30) Priorität : **07.05.79 HU TA001519**

(43) Veröffentlichungstag der Anmeldung :
**12.11.80 Patentblatt 80/23**

(45) Bekanntmachung des Hinweises auf die Patenterteilung : **22.06.83 Patentblatt 83/25**

(84) Benannte Vertragsstaaten :
**AT BE CH DE FR GB IT LI LU NL SE**

(56) Entgegenhaltungen :
**CH A 335 327**
**FR A 1 369 579**
**US A 3 342 638**

(73) Patentinhaber : **Taurus Gumiipari Vállalat**
**Kerepesi ut 17**
**Budapest VIII (HU)**

(72) Erfinder : **Tatai, Ilona, Dr.-Ing.**
**Gvadányi ut 109**
**1144 Budapest (HU)**
Erfinder : **Gündisch, Gusztáv, Dipl.-Ing.**
**Béla király ut 5**
**1125 Budapest (HU)**
Erfinder : **Szöts, Géza, Dipl.-Ing.**
**Népstation ut 33**
**1143 Budapest (HU)**
Erfinder : **Lantos, Elemér, Dipl.-Ing.**
**Mihály u. 7/b**
**1016 Budapest (HU)**

(74) Vertreter : **Füchsle, Klaus, Dipl.-Ing. et al**
**Hoffmann . Eitle & Partner Patentanwälte Arabella-**
**strasse 4**
**D-8000 München 81 (DE)**

EP 0 018 664 B1

Verfahren und Vorrichtung zur Zerkleinerung von Gummiabfällen, insbesondere Gummireifen

Die Erfindung bezieht sich auf ein Verfahren zur Zerkleinerung von Gummiabfällen, insbesondere Gummireifen, sowie auf eine Einrichtung zur Ausführung des Verfahrens.

Wie bekannt, bedeuten die Lagerung und die Nutzbarmachung von halb oder völlig vulkanisierten Gummiabfällen, insbesondere Textil- und/oder Stahleinlagen enthaltenden, abgenützten Gummireifen weltweit immer mehr Probleme. Eine wirtschaftliche Wiederverwendung solcher Gummiabfälle wäre höchst wünschenswert.

Es sind verschiedene Vorschläge zur Lösung der obengenannten Aufgabe (z. B. aus DE-PS 2 503 621 und US-Patentschrift 4 050 637) bekannt. Sie haben das gemeinsame Merkmal, daß man dabei die Zerkleinerung von Gummiabfällen durch Vermahlen unter Verwendung von Rippen-Walzwerken, Hammerschrotmühlen, Drehscheiben-Mahlmaschinen oder Brecher-Extrudern zu lösen versucht. Gemäß einem anderen Vorschlag wird das Vermahlen des Gummis bei hohem Druck durchgeführt. (FR-PS 2 278 399). Es ist ferner bekannt, die Gummiabfälle vor dem Vermahlen tiefzukühlen (DE-PS 2 312 753). Diese Vorschläge verlangen zu viel Energie, da sich der Gummiabfall beim Vermahlen infolge der großen Reibung erwärmt. Es wandelt sich also ein bedeutender Anteil der eingeführten Energie in Wärmeenergie um. Eine solche Zerkleinerung ist demzufolge kostspielig und nicht genügend wirkungsvoll. Obwohl der Wirkungsgrad der mechanischen Zerkleinerung durch die Tiefkühlung des Gummiabfalls in gewissen Maße verbessert werden kann, ist dieser Vorschlag mit zusätzlichem Aufwand verbunden. Hinzu kommt, daß die Metallteile, z. B. die Wulste von Reifen, bei den bekannten Vorschlägen vor der Zerkleinerung aus dem Gummiabfall entfernt werden müssen.

Hier will die Erfindung Abhilfe schaffen. Die durch die Erfindung zu lösende Aufgabe besteht darin, ein Verfahren und eine Einrichtung zur Zerkleinerung von Gummiabfällen, insbesondere Gummireifen zu schaffen, welche eine wirkungsvolle und wirtschaftliche Zerkleinerung bei verhältnismäßig geringem Aufwand ermöglicht.

Die Lösung gemäß der Erfindung ist demnach ein Verfahren zur Zerkleinerung von Gummiabfällen, insbesondere Gummireifen, bei welchem der zu zerkleinernde Gummiabfall einem dessen Kaltfließen hervorrufenden Druck ausgesetzt und durch eine oder mehrere Fließöffnungen hindurchgepreßt wird.

Die durch die Erfindung erreichten Vorteile sind im wesentlichen darin zu sehen, daß die unerwünschten relativen Bewegungen und Reibungen des Gummiabfalls und damit die Wärmeentwicklung und der Energieverlust im wesentlichen eliminiert werden. Die Faden- bzw. Kettenmolekül-Bindungen des Gummis werden unter dem Kaltverfließdruck gebrochen. Die Molekülketten des aus den Fließöffnungen austretenden Gummis können der Form der Fließöffnungen bei einer raschen Expansion nicht folgen, so daß auch die Molekülketten des Gummis getrennt werden. Die maximale Körnchenabmessung ist etwa gleich mit dem Querschnitt der jeweiligen Fließöffnung. Der Fließdruck und der Querschnitt der Fließöffnungen sind umgekehrt proportional.

Das erfindungsgemäße Verfahren kann mittels einer Vorrichtung ausgeführt werden, welche ein Preßwerkzeug und einen Druckraum für die Aufnahme und das Kaltfließen des zu zerkleinernden Gummiabfalls aufweist. Ferner ist dabei mindestens eine Fließöffnung vorgesehen, die in den Druckraum einmündet.

Die Erfindung kann auch in solchen Fällen mit Erfolg angewendet werden, in denen der zu zerkleinernde Gummiabfall eine Textil- und/oder Metalleinlage enthält. Die Textileinlage bewirkt keine Schwierigkeiten, da sie im Druckraum infolge des Gummi-Fließdruckes zerreißt. Die Metalleinlage (z. B. der Stahldraht eines Reifenwulsts) kann z. B. im Druckraum bleiben, d. h. sie muß aus dem Gummiabfall nicht im voraus entfernt werden.

Im folgenden wird die Erfindung anhand von mehrere Ausführungsbeispiele darstellenden Zeichnungen näher erläutert. Es zeigt :

Figuren 1a-1d eine erfindungsgemäße Vorrichtung zur Zerkleinerung von Gummi in verschiedenen Betriebsstellungen im Längsschnitt,

Figuren 2a-2e ein anderes Ausführungsbeispiel der erfindungsgemäßen Vorrichtung in verschiedenen Betriebsstellungen im Längsschnitt,

Figuren 3a-3i ein drittes Ausführungsbeispiel in verschiedenen Betriebsstellungen im Längsschnitt,

Figuren 4a-4c ein viertes Ausführungsbeispiel in verschiedenen Betriebsstellungen im Längsschnitt,

Figuren 5a und 5b eine Ausführungsvariante der Vorrichtung gemäß Fig. 4a-4c im Längsschnitt,

Figuren 6a und 6b ein weiteres Ausführungsbeispiel, wobei Fig. 6a eine Seitenansicht und Fig. 6b einen Schnitt gemäß Pfeil VI-VI in Fig. 6a darstellt, und

Figur 7 eine Ausführungsvariante der Vorrichtung gemäß Fig. 6a und 6b im Längsschnitt.

Vergleichbare Elemente sind in den Figuren mit den gleichen Bezugszeichen bezeichnet.

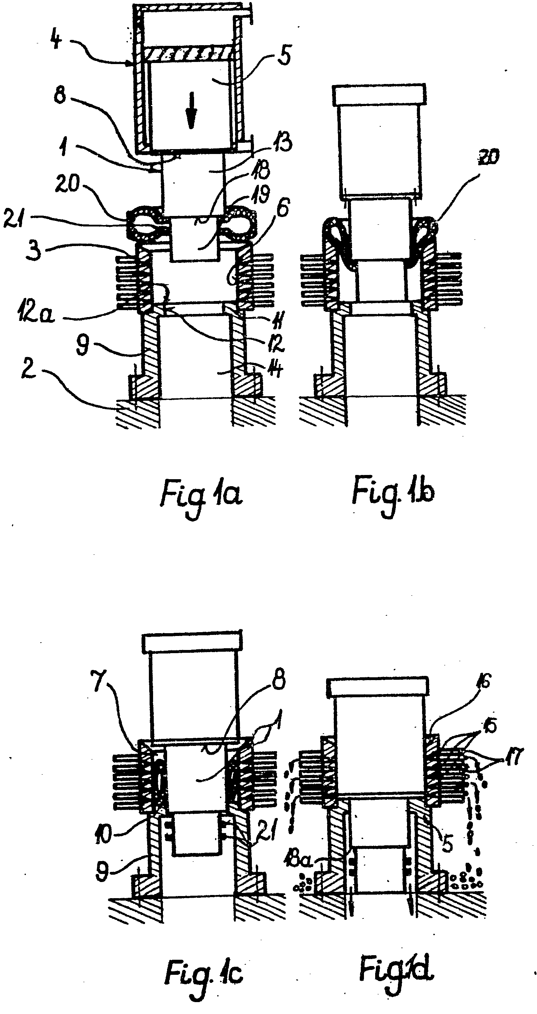

In den Fig. 1a-1d ist eine Vorrichtung zur Zerkleinerung von abgenützten Gummistreifen dargestellt, welche aus einer an sich bekannten hydraulischen Presse entwickelt wurde. Diese Einrichtung weist in an sich bekannter Weise einen Preßstempel 1 und eine Stütze 2 auf. Der Preßstempel 1 ist dabei mit einer Kolbenstange 5 eines doppelwirkenden hydraulischen Arbeitszylinders 4 fest verbunden und wirkt mit einem Fließwerkzeug 3 gemäß der Erfindung zusammen, das in diesem Falle auf der Stütze 2 ortsfest angeordnet ist. Der Arbeitszylinder 4 ist an eine (nicht dargestellte) Drucköquelle angeschlossen.

Gemäß der Erfindung weist die Vorrichtung einen Druckraum für die Aufnahme und das Kaltfließen des zu zerkleinernden Gummiabfalles auf, in den mindestens eine Fließöffnung einmündet. Gemäß Fig. 1c ist der zwischen einer inneren Mantelfläche 6 des Fließwerkzeuges 3 und dem Preßstempel 1 ausgebildete, ringraumförmige Druckraum mit 7 bezeichnet. Nach einem weiteren Absenken des Preßstempels 1 wird der Druckraum 7 von oben durch eine Schulter 8 des Preßstempels 1 und von unten durch eine Stirnfläche 10 eines Stützelementes 9 abgegrenzt. Das Stützelement 9 ist auf der Stütze 2 befestigt und an seiner Stirnfläche 10 mit einer Aufnahme 11 für das Fließwerkzeug 3 versehen. In der Aufnahme ist eine zu dem Druckraum 7 koaxiale Mittelbohrung 12 ausgebildet, in dem ein Kolbenabschnitt 13 des Preßstempels 1 dicht endverschiebbar ist. Im Stützelement 9 ist ferner ein zylindrischer Innenraum 14 vorgesehen, in den die Mittelbohrung 12 mündet. Der Durchmesser der Schulter 8 des Preßstempels 1 ist so bemessen, daß die Schulter 8 entlang der inneren Mantelfläche 6 des Fließwerkzeuges 3 dichtend verschoben werden kann.

Im vorliegenden Falle ist das Fließwerkzeug 3 mit mehreren Fließöffnungen 15 versehen, die als sich gegen die Mantelfläche 6 erweiternde, konische und radial verlaufende Bohrungen ausgebildet sind, deren Durchmesser im Bereich der Mantelfläche 5 mm beträgt. Am oberen Ende des Fließwerkzeuges 3 ist ein kegelförmiger Einführbereich 16 ausgebildet. Am Außenmantel des Fließwerkzeuges 3 sind im dargestellten Falle Versteifungsringe 17 aufgeschweißt (Fig. 1d).

Der Preßstempel 1 ist schließlich mit einer Schulterfläche 18 versehen, unter der ein Kolben 19 mit kleinerem Durchmesser ausgebildet ist. Die obere Kante der Mittelbohrung 12 sowie die Kante der Schulterfläche 18 sind jeweils als Schneidkante 12a bzw. 18a ausgebildet, die miteinander zusammenwirken (Fig. 1a und 1d).

Die erfindungsgemäße Einrichtung gemäß den Fig. 1a-1d arbeitet wie folgt :

Zunächst wird ein Reifen 20 mit Gewebeunterbau auf den kegelförmigen Einführbereich 16 koaxial aufgelegt. Dann wird der Preßstempel 1 durch Betätigung des Arbeitszylinders 4 in die in Fig. 1a dargestellte Betriebsstellung abgesenkt, wobei dessen Kolben 19 in die Öffnung des Reifens 20 eintaucht und die Schulterfläche 18 auf dem oberen Wulst 21 des Reifens 20 aufzuliegen kommt. Da die Wulste 21 des Reifens 20 als Stahlseilwulste ausgebildet sind und der Gewebeunterbau zu diesen fixiert ist, wird der Reifen 20 mit den Wulsten 21 mittels der Schulterfläche 18 des Preßstempels 1 in den Druckraum 7 hineingezogen (Fig. 1b).

Nachdem der Reifen 20 völlig in den Druckraum 7 hineingedrückt worden ist, schneiden die Schneidkanten 12a bzw. 18a die beiden Wulste 21 ab, die danach vom Kolben 19 des Preßstempels 1 herabgleiten (Fig. 1c).

Bei einem weiteren Absenken des Preßstempels 1 entsteht im Druckraum 7 der Druck, der zum Kaltfließen des Gummis nötig ist. Bei diesem Druck beginnt der Gummi also zu fließen. Dabei wird er durch die Fließöffnungen 15 hindurchgepreßt, wodurch der Gummi mit dem Gewebeunterbau aus den Fließöffnungen 15 bzw. aus dem Druckraum 7 in in Bruchstücke zerkleinertem Zustand hinaustritt. Der anzuwendende Fließdruck ist jeweils von dem Querschnitt und der Zahl der Fließöffnungen 15, vom Querschnitt des Druckraumes 7 sowie von der Art und der Zusammensetzung des zu zerkleinernden Gummiabfalls abhängig. In diesem Falle wurde ein Fließdruck von 25 000 N/cm$^2$ gewählt.

Nachdem die Zerkleinerung einer Charge von Gummiabfall durchgeführt wurde, wird der Preßstempel 1 mittels des Arbeitszylinders 4 bis zu seiner Ausgangsstellung angehoben.

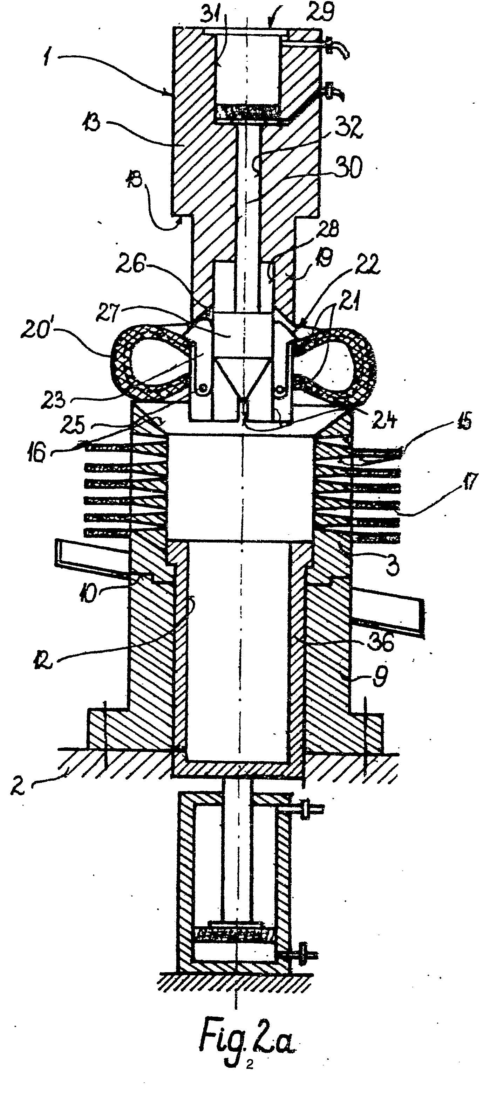

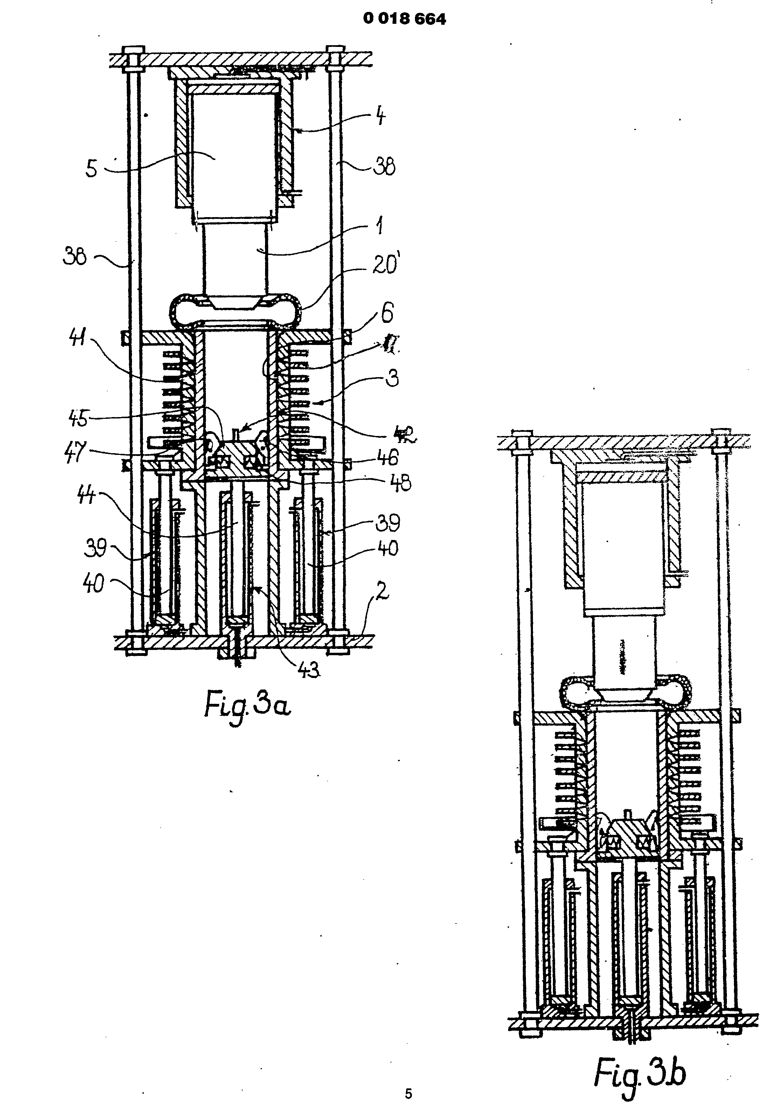

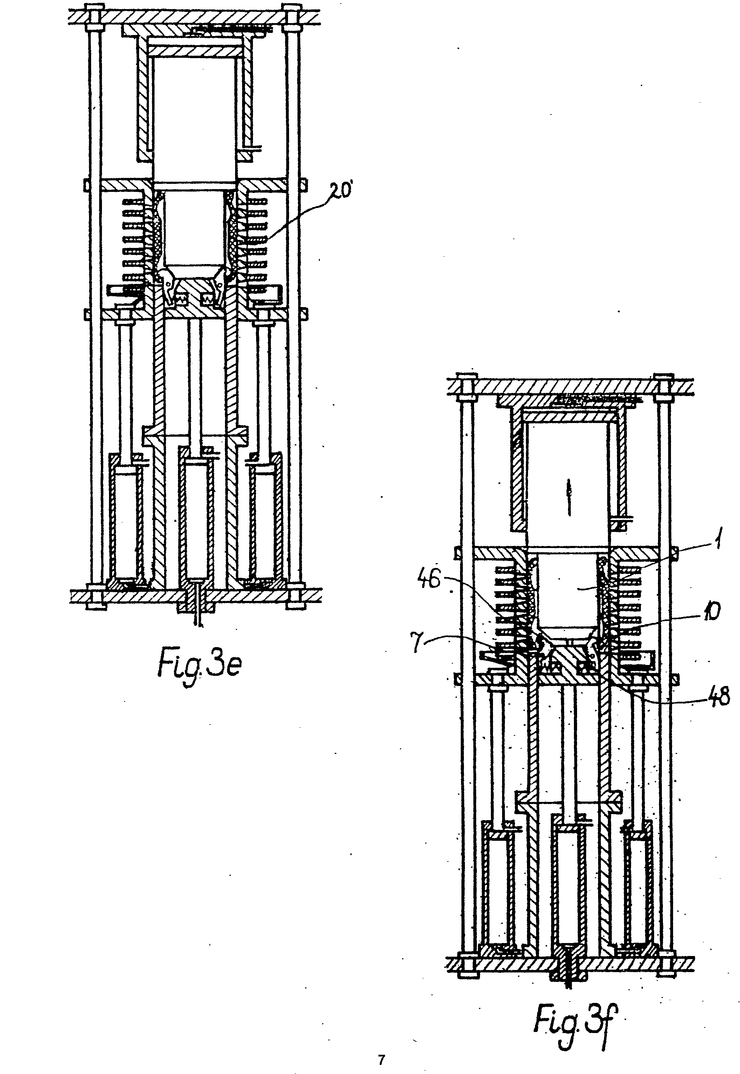

Zur Zerkleinerung von Stahlradialreifen kann die Ausführungsform der erfindungsgemäßen Einrichtung nach den Fig. 2a-2e oder Fig. 3a-3i vorteilhaft angewendet werden.

Die Funktionsweise der Vorrichtung gemäß den Fig. 2a-2c entspricht im wesentlichen der, wie sie bezüglich der Fig. 1a-1d beschrieben wurde. Deshalb ist hier der Arbeitszylinder für den Preßstempel 1 nicht dargestellt. Der Unterschied besteht lediglich darin, daß bei dieser Ausführungsform der ganze Reifen (d. h. zusammen mit den Wulsten) im Druckraum 7 dem Verfließdruck des Gummiabfalles ausgesetzt wird.

Nach Fig. 2a ist die erfindungsgemäße Vorrichtung mit einer Vorrichtung 22 für den Einzug des Reifens 20' in den Druckraum versehen. Diese weist vier Klinkenhebel 23 auf, die in radialen Aussparungen 24 des Preßstempelkolbens 19 um Bolzen 25 in vertikaler Ebene kippbar angeordnet sind. Die Kippbewegung der Klinkenhebel 23 nach außen wird durch eine Schrägfläche 26 der Aussparungen 24 begrenzt. Die Klinkenhebel 23 wirken innenseitig mit einem Spannkegel 27 zusammen, der in einer Mittelbohrung 28 des Kolbens 19 axial verschiebbar angeordnet ist. Der Spannkegel 27 ist mit einem Antrieb — hier mit einer Kolbenstange 30 eines doppelwirkenden hydraulischen Arbeitskolbens 29 — in Verbindung. Beim dargestellten Ausführungsbeispiel ist der Zylinder 31 des Arbeitskolben 29 direkt im Kolben 13 des Preßstempels 1 ausgestaltet. Ferner gleitet die Kolbenstange 30 in einer koaxialen Längsbohrung 32 des Preßstempels 1. Der Arbeitskolben 29 ist an die nicht dargestellte Drucköquelle angeschlossen.

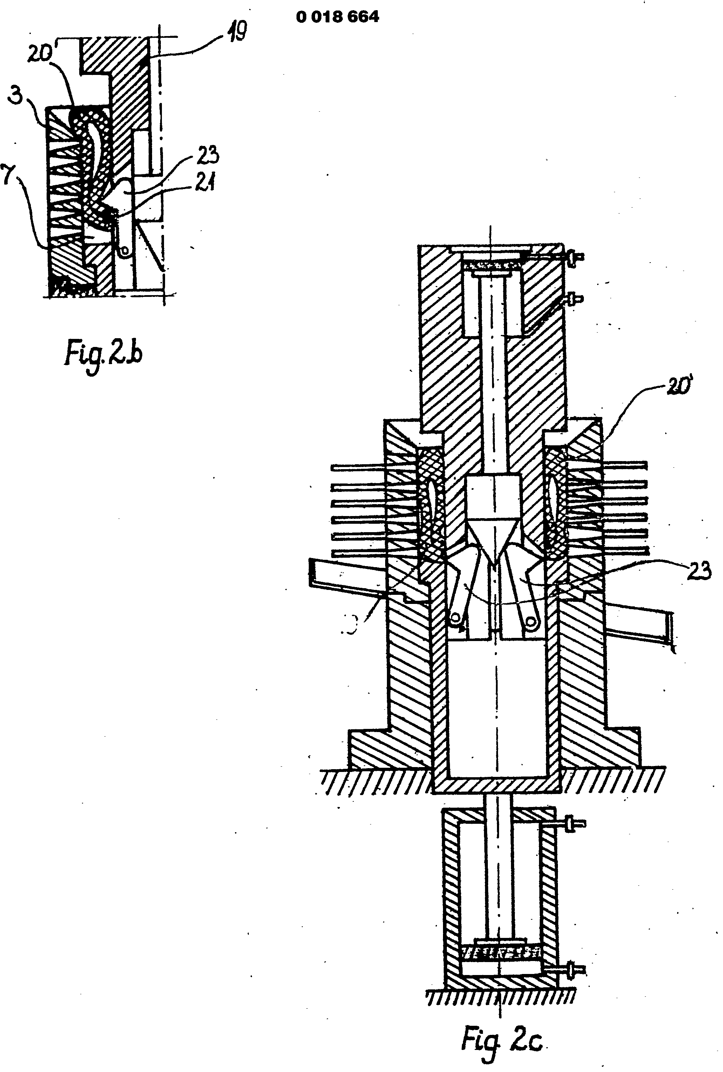

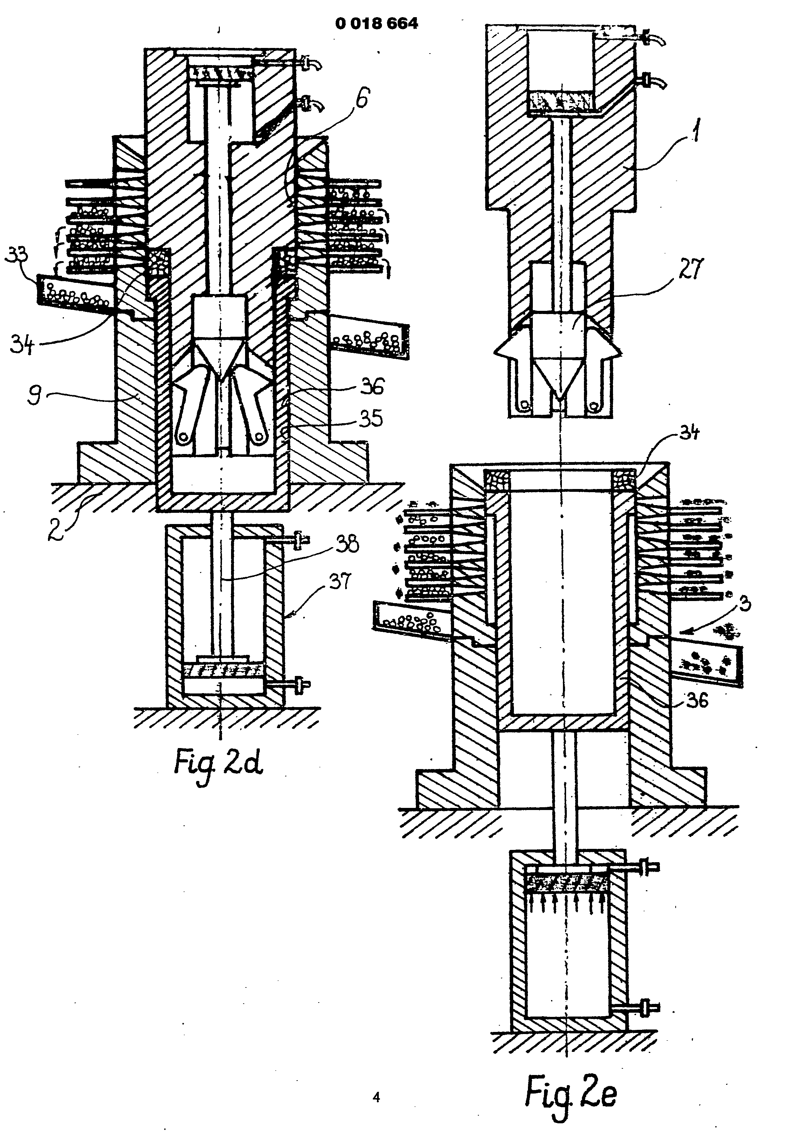

Die gemäß Fig. 2a aus dem Außenmantel des Zylinders 19 hervorstehenden Klinkenhebel 23 greifen an den oberen Wulst 21 des Reifens 20' an, so daß beim Absenken des Preßstempels 1 der Reifen 20' in den Druckraum 7 hineingedrückt wird (Fig. 2b). Die Klinkenhebel 23 sind in dieser Lage durch den Spannkegel 27 gehalten, der sich dabei in seiner unteren Stellung befindet. Anschließend wird der Spannkegel 27 mittels des Arbeitskolben 29 angehoben (Fig. 2c). Bei einem weiteren Absenken des Preßstempels 1 stoßen

die Klinkenhebel 23 auf die Stirnfläche 10, wodurch sie zwangsläufig nach innen gekippt werden (Fig. 2c und 2d). Danach wird der Preßstempel 1 weiter nach unten gedrückt und die Zerkleinerung des Reifens 20′ wird gemäß der obigen Darlegung durchgeführt. Es sind auch hier die gleichen Fließöffnungen 15 mit einem Durchmesser von 5 mm sowie im Druckraum ein Druck von 20 000 N/cm² gewählt. Der zerkleinerte Gummi fällt auf eine schräge Platte 33 herunter (Fig. 2d).

Nachdem der Preßstempel 1 in seine obere Ausgangsstellung angehoben wurde, wird der Spannkegel 27 wieder in seine untere Lage abgesenkt. Gleichzeitig wird ein ringförmiger Rückstand 34, der die Stahleinlage des Reifens 20′ enthält, aus dem Druckraum 7 durch eine Ausstoßbuchse 36 entfernt. Die Ausstoßbuchse 36 ist mit einer Kolbenstange 38 eines doppelwirkenden hydraulischen Arbeitszylinders 37 in Verbindung und entlang der inneren Mantelfläche 6 des Verfließwerkzeuges 3 sowie in einer Mittelbohrung 35 des Stützelementes 9 verschiebbar angeordnet (Fig. 2d und 2e). Aus Fig. 2a ist ersichtlich, daß die den Druckraum 7 von unten abgrenzende Stirnfläche 10 durch die obere Fläche der Ausstoßbuchse 36 ausgebildet ist. Der Arbeitszylinder 37 ist ebenfalls an die nicht dargestellte Druckölquelle angeschlossen.

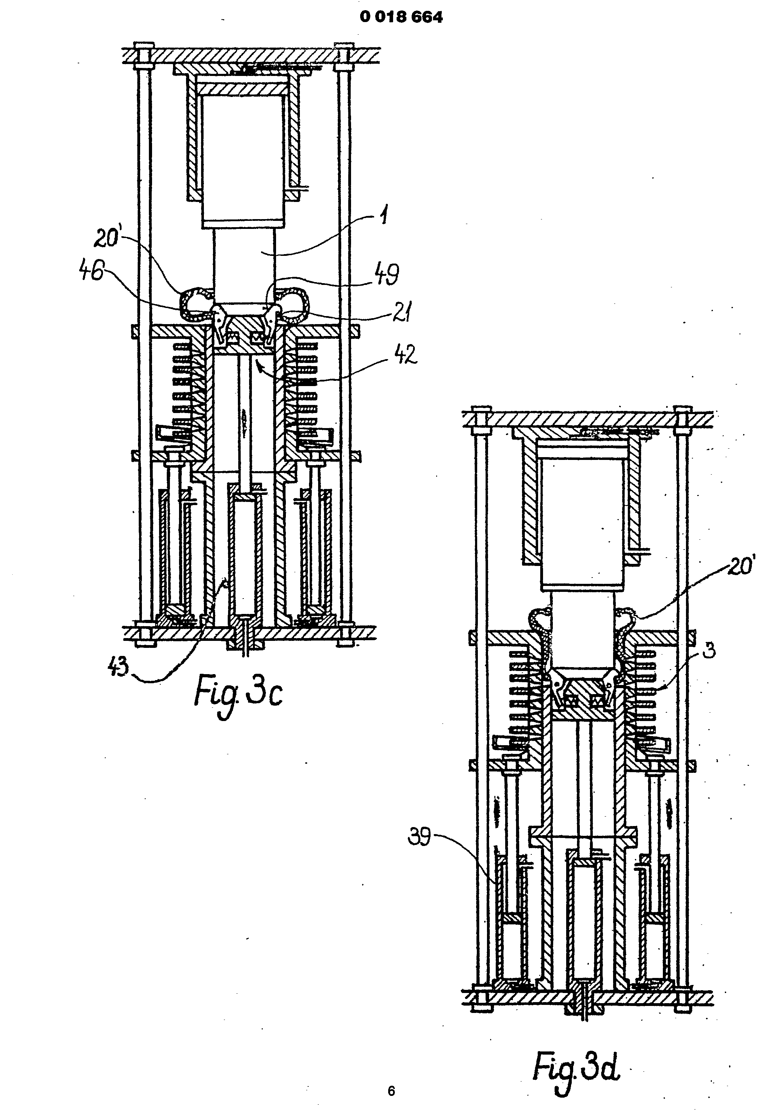

Nach einem bevorzugten Ausführungsbeispiel (Fig. 3a-3c) wird ein torusförmiger Stahlradialreifen 20′ zur Zerkleinerung zuerst zu einem Hohlzylinder verformt (Fig. 3d-3g). Dies weicht von der Verformungsweise gemäß Fig. 2a-2c ab, wo die Dicke des Gummis mindestens das Zweifache der Reifendicke ist. Durch diese Deformationsart kann die Druckkraft zum Erreichen eines Fließens des Gummis im Verhältnis zu der Lösung gemäß Fig. 2a-2e etwa auf die Hälfte vermindert werden.

Bei dieser Ausführungsform ist das Fließwerkzeug 3 entlang vertikaler Führungssäulen 38 durch Kolbenstangen 40 von doppelwirkenden hydraulischen Arbeitszylindern 39 verschiebbar angeordnet (Fig. 3a). Dabei gleitet die innere Mantelfläche 6 des Fließwerkzeuges 3 an einem ortsfest angeordneten Stützrohr 41. In diesem Fall dient die obere Fläche des Stützrohres 41 als die den Druckraum 7 von unten abgrenzende Stirnfläche 10 (Fig. 3f).

Im Hohlraum des Stützrohres 41 ist eine Vorrichtung 42 für Einzug des Reifens 20′ in den Druckraum 7 angeordnet. Diese weist einen Kopf 45 auf, der mittels der Kolbenstange 44 eines doppelwirkenden hydraulischen Arbeitszylinders 43 in axialer Richtung bewegbar ist (Fig. 3a). Der Kopf 45 ist mit vier Klinkenhebeln 46 versehen, die um Bolzen 47 in vertikaler Ebene kippbar angeordnet sind. Die Klinkenhebel 46 sind in ihrer geschlossenen Stellung mittels Druckfedern 48 gehalten. Das untere Ende des Preßstempels 1 ist bei dieser Ausführungsform als ein Kegelstumpf 49 ausgebildet durch welchen die Klinkenhebel 46 zum Erfassen des unteren Wulsts 21 des Reifens 20′ gegen die Wirkung der Druckfedern 48 auseinandergespreizt werden können (Fig. 3c).

Zur Zerkleinerung des Reifens 20′ wird zunächst das Fließwerkzeug 3 durch die Arbeitszylinder 39 in seine untere Stellung, sowie der Preßstempel 1 durch den Arbeitszylinder 4 in seine obere Endstellung nach Fig. 3a verschoben. Dann wird ein Stahlradialreifen 20′ zwischen den Preßstempel 1 und das Fließwerkzeug 3 gelegt. Nachdem der Preßstempel 1 in die in Fig. 3b dargestellte Lage gesenkt wurde, wird der Kopf 45 der Vorrichtung 42 für den Reifeneinzug mittels des Arbeitszylinders 43 in seine obere Lage gemäß Fig. 3c angehoben. Nun werden die Klinkenhebel 46 durch den Kegelstumpf 49 auseinandergespreizt, so daß durch diese der untere Wulst 21 des Reifens 20′ erfaßt wird.

Danach wird das Fließwerkzeug 3 angehoben und dadurch der torusförmige Reifen 20′ zu einem Hohlzylinder deformiert (Fig. 3d-3e). Um den unteren Wulst 21 des Reifens 20′ von den Klinkenhebeln 46 freigeben zu können, wird der Preßstempel 1 etwas angehoben (Fig. 3f).

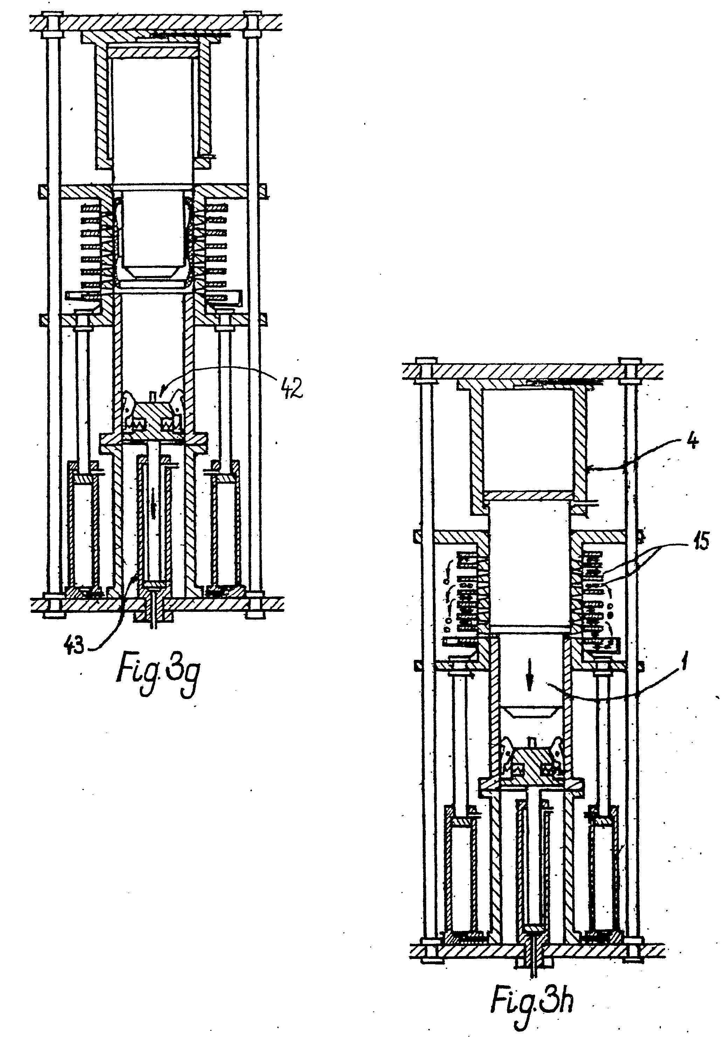

Nun wird der Kopf 45 in seine untere Lage abgesenkt und die Zerkleinerung des Reifens 20′ wie oben erläutert durchgeführt (Fig. 3g-3h). Danach wird der Preßstempel 1 in seine obere Endstellung angehoben und das Fließwerkzeug 3 in seine untere Endstellung abgesenkt. Der Rückstand 34 kann in dieser Betriebsstellung aus dem Druckraum 7 entfernt werden. Im vorliegenden Fall werden die gleichen Fließöffnungen 15 und ein Fließdruck von 20 000 N/cm² angewendet wie in dem vorher geschilderten.

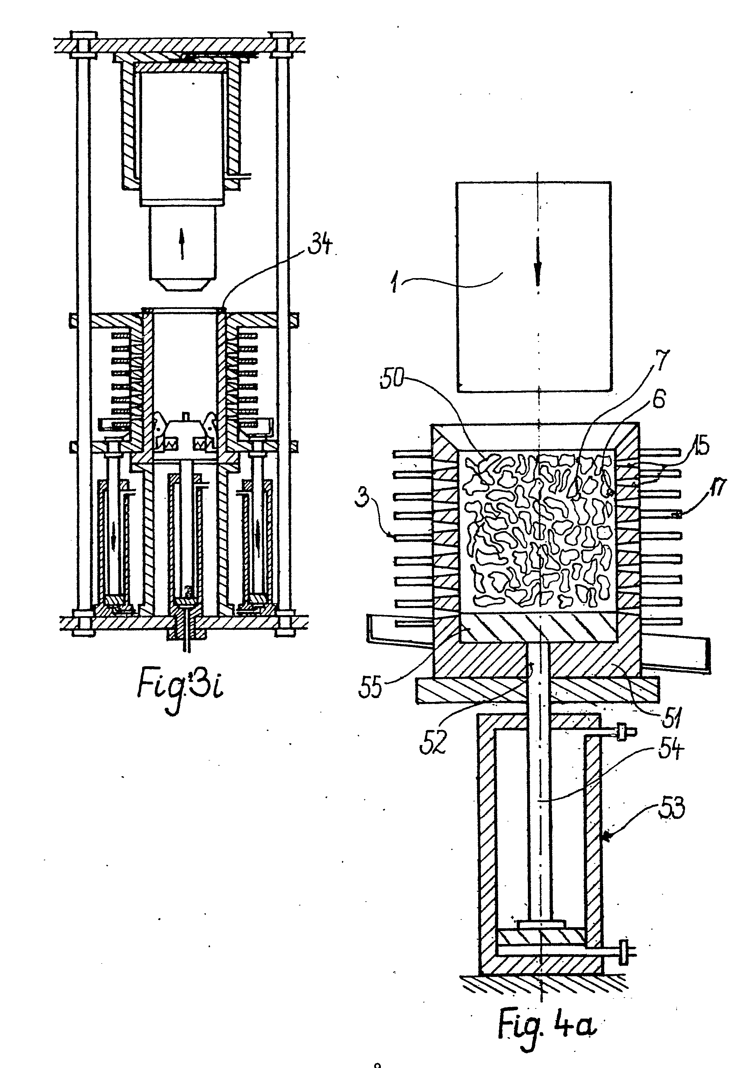

Die Fig. 4a-4c zeigen eine weitere Ausführungsform der erfindungsgemäßen Einrichtung, welche für die Zerkleinerung von allerlei aus einem Stück bestehender Gummiabfällen, so z. B. unvulkanisierten, vulkanisierten oder übervulkanisierten Gummiabfällen und sogar Kautschuk geeignet ist. Dabei wird ein zu zerkleinernder, aus Stücken bestehender Gummiabfall 50 in den Druckraum 7 eingelegt. Danach wird die Zerkleinerung, wie erläutert wurde, durch Absenken des Preßstempels 1 durchgeführt. Bei durchgeführten Versuchen wurden die gleichen Fließöffnungen 15 und ein Fließdruck von 9 000 N/cm² zur Zerkleinerung eines halbvulkanisierten Gummiabfalls angewendet, wobei aber das Endprodukt nicht brockenförmig, sondern strangförmig ist.

Aus Fig. 4a ist ersichtlich, daß in einer Mittelbohrung 52 einer Bodenplatte 51 des Fließwerkzeuges 3 eine Kolbenstange 54 eines doppelwirkenden hydraulischen Arbeitszylinders 53 gelagert ist. Am freien Ende der Kolbenstange 54 ist ein Kolben 55 befestigt, der den Druckraum 7 von unten abgrenzt und entlang der inneren Mantelfläche 6 des Fließwerkzeuges 3 verschiebbar angeordnet ist. Nachdem der Zerkleinerungsvorgang beendet ist, kann der eventuelle Rückstand 34 aus dem Druckraum 7 mittels des Kolbens 55 entfernt werden (Fig. 4c).

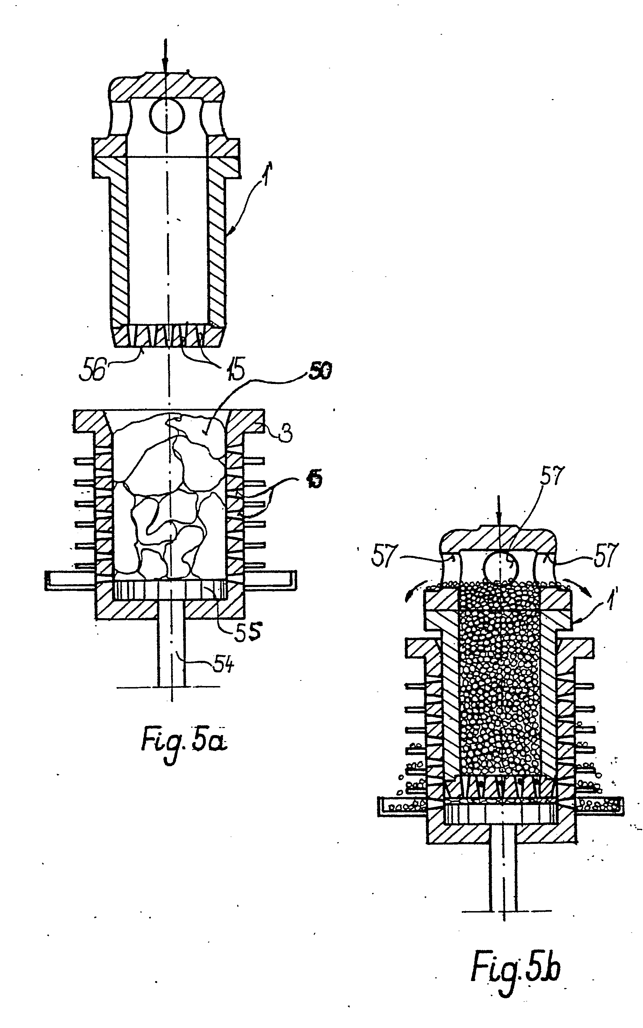

In den Fig. 5a und 5b ist eine Ausführungsvariante der Einrichtung gemäß den Fig. 4a-4c ersichtlich, bei welcher Fließöffnungen 15 auch in einer Druckplatte 56 des Preßstempels 1 ausgebildet sind. Dabei weist der Preßstempel 1 einen Hohlraum auf, in welchen dieser Fließöffnungen 15 und Auslaßöffnungen 57 einmünden.

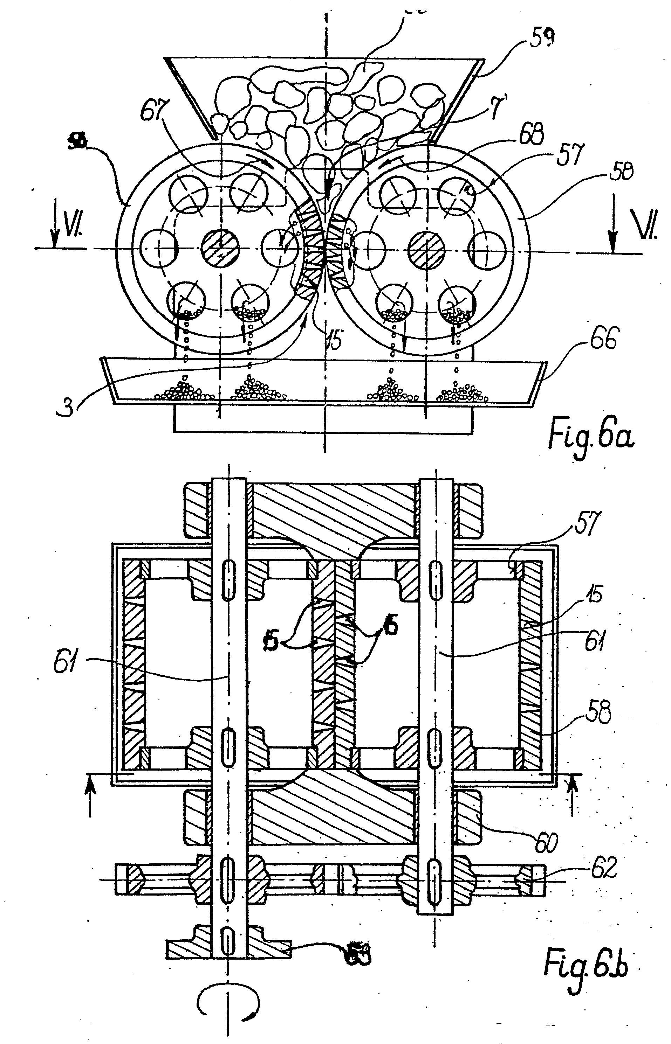

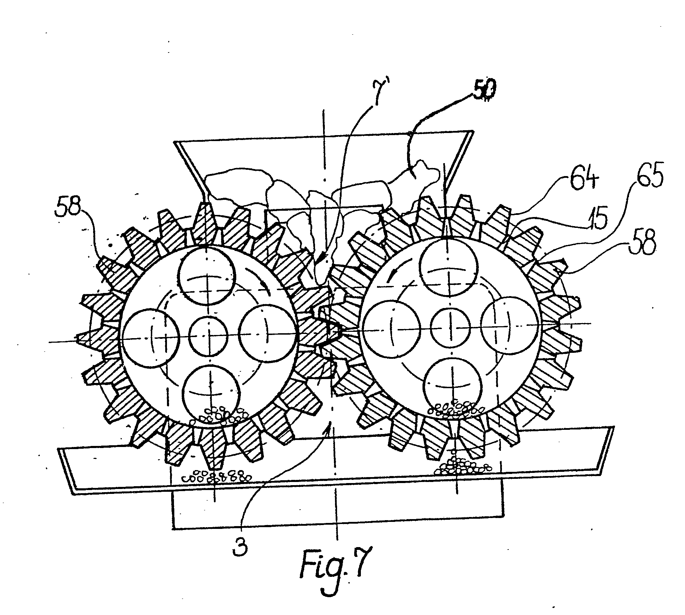

Schließlich sind zwei weitere Ausführungsbeispiele der erfindungsgemäßen Einrichtung für eine Gummizerkleinerung in den Fig. 6a und 6b bzw. Fig. 7 dargestellt, bei welchen der Druckraum als offener Raum 7' ausgebildet ist. Diese Anordnungen sind für die Zerkleinerung von stückigen, metalleinlagefreien Gummiabfällen geeignet.

Gemäß den Fig. 6a und 6b besteht das Fließwerkzeug aus zwei einander berührenden Trommeln 58, die an horizontalen Wellen 61 angeordnet sind. Die Wellen 61 sind in einem Gestell 60 drehbar gelagert. Jede Trommel 58 weist einen inneren Hohlraum auf, in welchen die hier als radiale Bohrungen ausgebildeten Fließöffnungen 15 einmünden. An beiden Wellen 61 ist je ein Zahnrad 62 befestigt, die miteinander in Eingriff stehen. Aus Fig. 6b ist ersichtlich, daß an einer der Wellen 61 eine Antriebsscheibe 63 befestigt ist, die an einen bekannten, nicht dargestellten Antrieb angeschlossen ist. Die Trommeln 58 stehen damit in einer zwangsläufigen Drehverbindung.

Im Betrieb werden die Trommeln 58 in mit Pfeilen 67 bzw. 68 angedeuteten Drehrichtungen angetrieben (Fig. 6a), wodurch der Gummiabfall 50 aus einem Trichter 59 in die sich verengende Kehle zwischen den Trömmeln 58 eingezogen und der Druck zum Kaltfließen des Gummis erzeugt wird. Diese Kehle bildet den offenen Druckraum, der in Fig. 6a mit 7' bezeichnet ist. Die Fließöffnungen 15 sind zueinander versetzt ausgebildet. Die Trommeln 58 sind mit seitlichen Auslaßöffnungen 57 versehen, durch welche der zerkleinerte Gummiabfall auf die Sammelplatte 66 gelangt.

Eine wirkungsvolle Gummizerkleinerung ermöglicht die Ausführungsvariante gemäß Fig. 7. Dabei sind die Trommeln 58 mit radial verlaufenden Zähnen 64 versehen, wobei die Zähne der einen Trommel 58 mit den Zähnen der anderen Trommel 58 im Eingriff stehen. Bei diesem Ausführungsbeispiel sind die Fließöffnungen 15 in Zahnlücken 65 ausgebildet. Der durch diese Anordnung gebildete offene Druckraum ist hier ebenfalls mit 7' bezeichnet.

Selbstverständlich sind zahlreiche weitere Ausführungsformen und Kombination der erfindungsgemäßen Vorrichtung möglich. Die Fließöffnungen 15 können z. B. als viereckige Öffnungen oder Schlitze in jedem der den Druckraum 7 begrenzenden Elemente ausgebildet werden, wobei der Querschnitt und die Anzahl der Fließöffnungen 15 entsprechend den Verhältnissen gewählt werden können. Ferner kann die erfindungsgemäße Einrichtung auch als verfahrbare Einrichtung ausgestaltet werden, mittels welcher z. B. die abgenutzten Reifen an den Sammelstellen verarbeitet werden können.

Gemäß Versuchen kann die Zerkleinerung von Gummiabfällen mittels der erfindungsgemäßen Einrichtung — neben verhältnismäßig geringem Aufwand — wirkungsvoller und wirtschaftlicher durchgeführt werden als mit den bekannten Einrichtungen. Es ist auch ein wichtiger Vorteil, daß die erfindungsgemäße Lösung zusätzliche Arbeitsvorgänge wie z. B. die Entfernung der Reifenwulste sowie das Zerstückeln der Reifen, überflüssig macht, wodurch zusätzlicher Aufwand gespart werden kann.

Es ist zu betonen, daß unter « Gummiabfall » neben abgenutzten Reifen alle Gummiprodukte und Abfälle vom Kautschuk bis zum vollvulkanisierten Gummi zu verstehen sind.

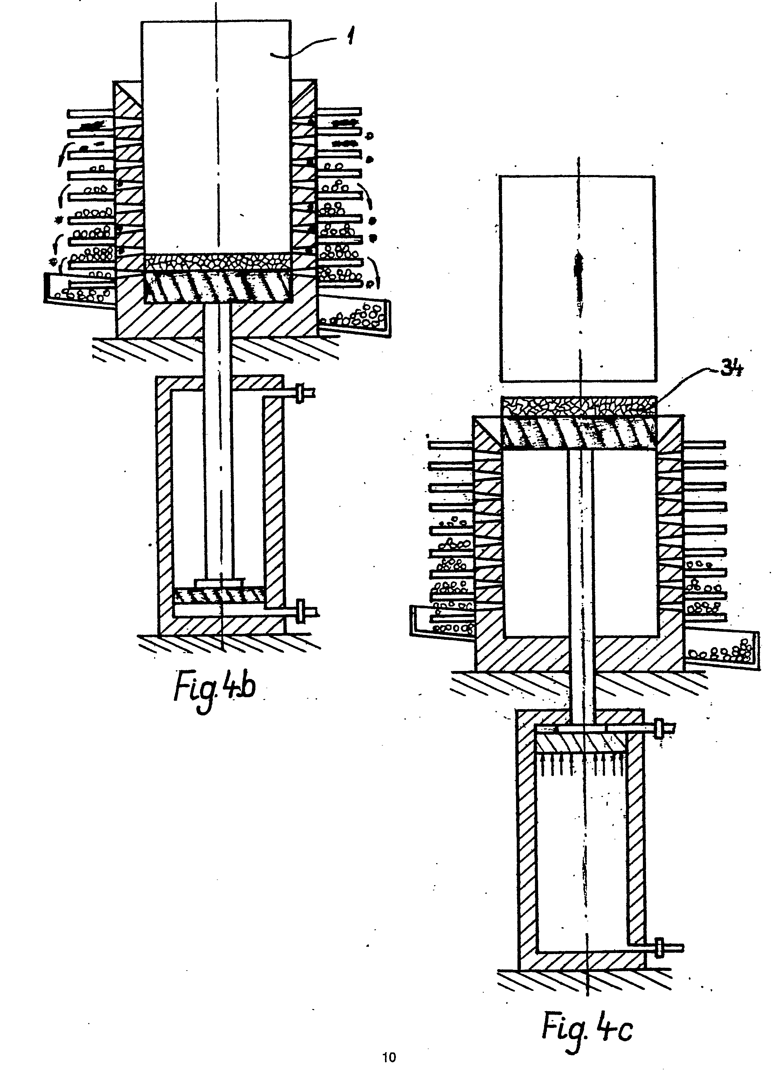

Das aus dem Gummiabfall erfindungsgemäß hergestellte zerkleinerte Gummiprodukt kann in an sich bekannter Weise sortiert werden. Die Fraktionen dieses krümmelförmigen Guts mit einem Durchmesser von höchstens 3 mm können direkt in der Gummiherstellung, die größeren Fraktionen hingegen z. B. als Zuschlagmaterial bei der Herstellung von Isolationsbekleidungen, Fußbodenbelägen, Laufbahnen, Beschichtungen für Sportplätze usw. verwendet werden. Bei der erfindungsgemäßen Zerkleinerung von Kautschuk oder Gummi ohne Raumnetzstruktur (z. B. gemäß Fig. 4) ist das Produkt strangförmig. Es ist ebenfalls in der Gummiherstellung direkt verwendbar.

**Ansprüche**

1. Verfahren zur Zerkleinerung von Gummiabfällen, insbesondere Gummireifen, dadurch gekennzeichnet, daß der zu zerkleinernde Gummiabfall einem dessen Kaltfließen hervorrufenden Druck ausgesetzt und durch eine oder mehrere Fließöffnungen hindurchgepreßt wird.

2. Vorrichtung zur Durchführung des Verfahrens nach Anspruch 1, dadurch gekennzeichnet, daß sie ein Preßwerkzeug und einen Druckraum (7 ; 7') für die Aufnahme und das Kaltfließpressen des zu zerkleinernden Gummiabfalles (20, 20' ; 50) und mindestens eine in den Druckraum (7 ; 7') einmündende Fließöffnung (15) aufweist.

3. Vorrichtung nach Anspruch 2, dadurch gekennzeichnet, daß der Druckraum (7) als ein beim Kaltfließvorgang durch ein Fließwerkzeug (3) und einen zu diesem axial verschiebbaren Preßstempel (1) mindestens teilweise abgegrenzter, geschlossener Raum ausgebildet ist und daß die Fließöffnungen (15) im Fließwerkzeug (3) und/oder im Preßstempel (1) ausgebildet sind.

4. Vorrichtung nach Anspruch 3, dadurch gekennzeichnet, daß der Druckraum (7) durch eine Ausstoßeinheit (36, 37 ; 41 ; 53, 54, 55) teilweise abgegrenzt wird und daß die gegenseitige axiale Lage der Ausstoßeinheit und des Fließwerkzeuges (3) zum Ausstoßen eines Rückstandes (34) aus dem Druckraum (7) nach der Zerkleinerung veränderbar ist.

5. Vorrichtung nach Anspruch 3 oder 4, dadurch gekennzeichnet, daß das Fließwerkzeug (3) zylinderförmig ist und radial verlaufende Fließöff-

nungen (15) und an seinem oberen Ende einen kegelförmigen Einführbereich (16) aufweist, daß das Fließwerkzeug (3) auf einem Stützelement (9) angeordnet ist, das eine zu dem Druckraum (7) koaxiale Mittelbohrung (12) aufweist, und daß der Preßstempel (1) mit einer Schulterfläche (18) versehen ist, deren Kante (18a) als mit der oberen Kante (12a) der Mittelbohrung (12) zusammenwirkende Schneidkante ausgebildet ist.

6. Vorrichtung nach Anspruch 3 oder 4, dadurch gekennzeichnet, daß eine Vorrichtung (22 ; 42) für den Einzug eines Reifens (20') in den Druckraum (7) vorgesehen ist.

7. Vorrichtung nach Anspruch 2, dadurch gekennzeichnet, daß der Druckraum (7') als offener Raum ausgestaltet ist und das Fließwerkzeug (3), das zugleich als Preßwerkzeug wirkt, aus zwei in entgegengesetzter Drehrichtung angetriebenen Trommeln (58) besteht.

8. Vorrichtung nach Anspruch 7, dadurch gekennzeichnet, daß beide Trommeln (58) an ihren äußeren Mantelflächen mit axial verlaufenden Zähnen (64) versehen sind, die miteinander in Eingriff stehen, und daß die Fließöffnungen (15) als von Zahnlücken (65) in einen Innenraum der jeweiligen Trommel (58) führende Öffnungen ausgebildet sind.


## Claims

1. Process for the comminution of rubber wastes, especially of rubber tires, characterized in that the rubber waste to be comminuted is subjected to a pressure which causes its cold flowing and is pressed through one or more flow apertures.

2. Device for the implementation of the process according to claim 1, characterized in that it comprises a pressing die and a pressure chamber (7 ; 7') for the reception and cold-flow pressing of the rubber waste to be comminuted (20, 20' ; 50) and at least one flow aperture (15) which opens into said pressure chamber (7 ; 7').

3. Device according to claim 2, characterized in that said pressure chamber (7) is formed as an enclosed chamber which is at least partially bounded during the cold flow process by a flow tool (3) and a press die (1) and that the flow apertures (15) are located in the flow tool (3) and/or in the press die (1).

4. Device according to claim 3, characterized in that said pressure chamber (7) is partially limited by an ejection unit (36, 37 ; 41 ; 53, 54, 55) and in that the relative axial position of the ejection unit and of the flow tool (3) can be altered in order to eject a residue (34) from the pressure chamber (7) after the comminution.

5. Device according to claims 3 or 4, characterized in that the flow tool (3) is cylindrical and has radially extending flow apertures (15) and on its upper end a conical injection area (16), in that said flow tool (3) is arranged on a support element (9), which has a center borehole (12) coaxially arranged to the pressure chamber (7), and in that said press die (1) is provided with a shoulder surface (18) whose edge (18a) is formed as a cutting edge which interacts with the center borehole (12).

6. Device according to claims 3 or 4, characterized in that a device is provided (22 ; 42) for the induction of a tire (20') into said pressure chamber (7).

7. Device according to claim 2, characterized in that the pressure chamber (7) is shaped as an open chamber and in that the flow tool (3), which also acts as the pressing tool, consists of two drums (58) driven in opposite rotary directions.

8. Device according to claim 7, characterized in that both drums (58) are provided on their outer surfaces with axially extending cogs (64) which are mutually engaged, and in that the flow apertures (15) are formed as apertures which lead from cog spaces (65) into an inner chamber of the respective drum (58).


## Revendications

1. Procédé pour le broyage de déchets en caoutchouc, en particulier de pneumatiques, caractérisé en ce que les déchets en caoutchouc qui doivent être broyés sont soumis à une pression provoquant leur fluage ou écoulement à froid, puis poussés sous pression à travers une ou plusieurs ouvertures d'écoulement.

2. Appareil pour l'application du procédé selon la revendication 1, caractérisé en ce qu'il comporte un outil de pression, une enceinte à pression (7, 7') pour le chargement et la compression jusqu'au fluage des déchets de caoutchouc (20, 20', 50) qui doivent être broyés et au moins une ouverture d'écoulement (15) débouchant dans l'enceinte à pression (7, 7').

3. Appareil selon la revendication 2, caractérisé en ce que l'enceinte de pression (7) est constituée par un espace fermé délimité au moins partiellement lors de l'écoulement par un organe d'écoulement (3) et par un poinçon (1) qui peut se déplacer suivant l'axe de l'organe d'écoulement et en ce que les ouvertures d'écoulement (15) sont ménagées dans l'organe d'écoulement (3) et/ou dans le poinçon (1).

4. Appareil selon la revendication 3, caractérisé en ce que l'enceinte à pression (7) est délimitée partiellement par un dispositif d'évacuation (36, 37, 41, 53, 54, 55) et en ce que les positions relatives dans le sens axial du dispositif d'évacuation et de l'organe d'écoulement (3) peuvent être modifiées, après le broyage, pour l'évacuation d'un résidu (34).

5. Appareil selon l'une quelconque des revendications 3 ou 4, caractérisé en ce que l'organe d'écoulement (3) a la forme d'un cylindre et comporte des ouvertures d'écoulement (15) orientées dans le sens radial et, à son extrémité supérieure, une zone d'introduction ou de chargement (16) en forme de cône, en ce que l'organe d'écoulement (3) est monté sur l'élément d'appui (9) qui comporte une ouverture médiane (12) ayant le même axe que l'enceinte à pression (7) et en ce que le poinçon (1) comporte une surface d'épaulement (18) dont le bord (18a), qui agit en association avec le bord supérieur (12a) de l'ouverture médiane (12), constitue un bord coupant.

6. Appareil selon l'une quelconque des revendications 3 ou 4, caractérisé en ce qu'il comprend un dispositif (22, 42) assurant l'introduction d'un pneu (20') dans l'enceinte à pression (7).

7. Appareil selon la revendication 2, caractérisé en ce que l'enceinte à pression (7') est une enceinte ouverte et que l'organe d'écoulement (3) qui agit en même temps comme outil de pression, est constitué par deux tambours (58) tournant en sens inverse.

8. Appareil selon la revendication 7, caractérisé en ce que deux tambours (58) sont prévus avec sur leurs bords extérieurs des dents (64) dirigées axialement et engrenant les unes dans les autres et en ce que les ouvertures d'écoulement (15) sont formées par des intervalles interdentaires (65) délimités entre les dents des ouvertures faisant communiquer les intervalles interdentaires avec l'intérieur de chaque tambour (58).

0 018 664

Fig 1a

Fig. 1b

Fig. 1c

Fig 1d

1

Fig. 2a

Fig. 2.b

Fig 2c

Fig 2d

Fig 2e

Fig. 3a

Fig. 3b

Fig. 3c

Fig. 3d

Fig. 3e

Fig. 3f

Fig.3g

Fig.3h

Fig. 3i

Fig. 4a

Fig. 4b

Fig. 4c

Fig. 5a

Fig. 5b

Fig. 6a

Fig. 6b

Fig. 7